# EUROPÄISCHE PATENTSCHRIFT

(11) **EP 3 317 063 B1**
(45) Veröffentlichungstag und Bekanntmachung des Hinweises auf die Patenterteilung: **03.06.2020**
(21) Anmeldenummer: 16740938.2
(22) Anmeldetag: 24.06.2016
(51) Int. Cl.: B29B 7/74, F04B 9/123, F04B 13/00

(54) **VORRICHTUNG MIT INTERMITTIERENDER BEREITSTELLUNG EINER MIT GAS VERMISCHTEN FLÜSSIGEN KUNSTSTOFFKOMPONENTE**
DEVICE WITH INTERMITTEND DELIVERY OF A LIQUID POLYMERIC COMPONENT MIXED WITH A GAS
DISPOSITIF À ALIMENTATION INTERMITTENTE D'UN COMPOSANT POLYMÉRIQUE LIQUIDE MÉLANGÉ À UN GAZ

(30) Priorität: 03.07.2015 AT 4322015
(43) Veröffentlichungstag der Anmeldung: 09.05.2018
(73) Patentinhaber: Henkel AG & Co. KGaA, 40589 Düsseldorf (DE)
(72) Erfinder: BALDAUF, Günther, 6914 Hohenweiler (AT); METZLER, Mario, 6890 Lustenau (AT)
(74) Vertreter: Torggler & Hofinger Patentanwälte
(86) Internationale Anmeldenummer: PCT/AT2016/050226
(87) Internationale Veröffentlichungsnummer: WO 2017/004635

(56) Entgegenhaltungen:
- DE-A1- 3 913 000
- JP-A- H06 198 152
- RU-C1- 2 142 358
- SU-A1- 1 260 220
- US-A- 3 184 419
- US-A- 3 627 275
- US-A- 3 692 442
- US-A- 3 908 862
- US-A- 4 275 172
- US-A- 5 551 486
- US-B1- 6 538 040

## Beschreibung

Die Erfindung betrifft eine Vorrichtung mit den Merkmalen des Oberbegriffs des Anspruchs 1.

Um ständig genügend flüssige Kunststoffkomponente für die Dosiervorrichtung bereitzustellen, ist es bereits bekannt zwei Quellen zur Verfügung zu stellen, welche wechselweise intermittierend arbeiten. Dies ist mit einem hohen konstruktiven Aufwand verbunden. Es stellt sich weiters das Problem, dass der Umschaltpunkt von der einen zur anderen Quelle korrekt gewählt werden muss, damit kein ungewünschter Druckabfall stattfindet. Eine ähnliche gattungsbildende Vorrichtung ist beispielsweise aus der US 6,538,040 B1 bekannt.

Gattungsfremde Vorrichtungen dagegen gehen aus der SU 1260220 A1, der RU 2 142 358 C1 und der US 5,551,486 hervor, welche jeweils die Vermischung von zwei Flüssigkeiten - und nicht die Vermischung von Gas mit einer flüssigen Kunststoffkomponente - zeigen.

Die Aufgabe der vorliegenden Erfindung besteht darin, eine gegenüber dem Stand der Technik verbesserte Vorrichtung zu schaffen, bei welcher diese Probleme vermieden werden.

Diese Aufgabe wird durch eine Vorrichtung mit den kennzeichnenden Merkmalen von Anspruch 1 gelöst.

Bevorzugte Ausführungsvarianten sind in den Unteransprüchen angeführt.

Demnach ist erfindungsgemäß vorgesehen, dass zwischen der Quelle für die wenigstens eine flüssige Kunststoffkomponente und der Dosiervorrichtung eine über einen Eingang mit der Quelle und über einen Ausgang mit der Dosiervorrichtung verbundene Puffervorrichtung mit einem variablen Puffervolumen angeordnet ist. Dies ermöglicht es, mit einer einzigen intermittierend arbeitenden Quelle unterbrechungsfrei die flüssige Kunststoffkomponente der Dosiervorrichtung zur Verfügung zu stellen. Insofern stellt die Puffervorrichtung sicher, dass immer genügend Material mit einem ausreichenden Vorspanndruck zur Verfügung steht. Die Puffervorrichtung selbst muss nicht selbst als Pumpe fungieren sondern ist rein passiv ausgebildet.

Unter einer intermittierend arbeitenden Quelle wird nicht nur eine Quelle verstanden, deren Förderleistung auf Null abfällt (z. B. eine Kolbenpumpe), sondern auch eine Quelle, deren Förderleistung, insbesondere pulsierenden, Schwankungen unterworfen ist (z. B. Zahnradpumpe).

Aufgrund unvermeidlicher Reibungsverluste ist bevorzugt vorgesehen, dass der Vorspanndruck der Puffervorrichtung besonders bevorzugt über ein, vorzugsweise pneumatisches, Proportionaldruckventil eingestellt werden kann.

Ausführungsformen der Erfindung werden anhand der Figuren diskutiert. Es zeigen:
- Fig. 1: schematisch eine Vorrichtung zur Herstellung von geschäumten Kunststoffteilen,
- Fig. 2: ein erstes Ausführungsbeispiel einer Kolbenpumpe, bei welcher die Kolben mechanisch gegengleich gekoppelt sind,
- Fig. 3: eine Variante des Ausführungsbeispiels der Fig. 2,
- Fig. 4: ein Ausführungsbeispiel der Erfindung, bei welchem die Kolben mechanisch synchron gekoppelt sind,
- Fig. 5: ein Ausführungsbeispiel der Erfindung, bei welchem die Kolben elektrisch gekoppelt sind,
- Fig. 6: ein Ausführungsbeispiel der Erfindung, wobei die eine Kolbenpumpe und die andere Kolbenpumpe jeweils wechselweise als Einbringvorrichtung und als Fördervorrichtung ausgebildet sind,
- Fig. 7: im Detail die Puffervorrichtung und
- Fig. 8: eine alternative Variante der Puffervorrichtung.

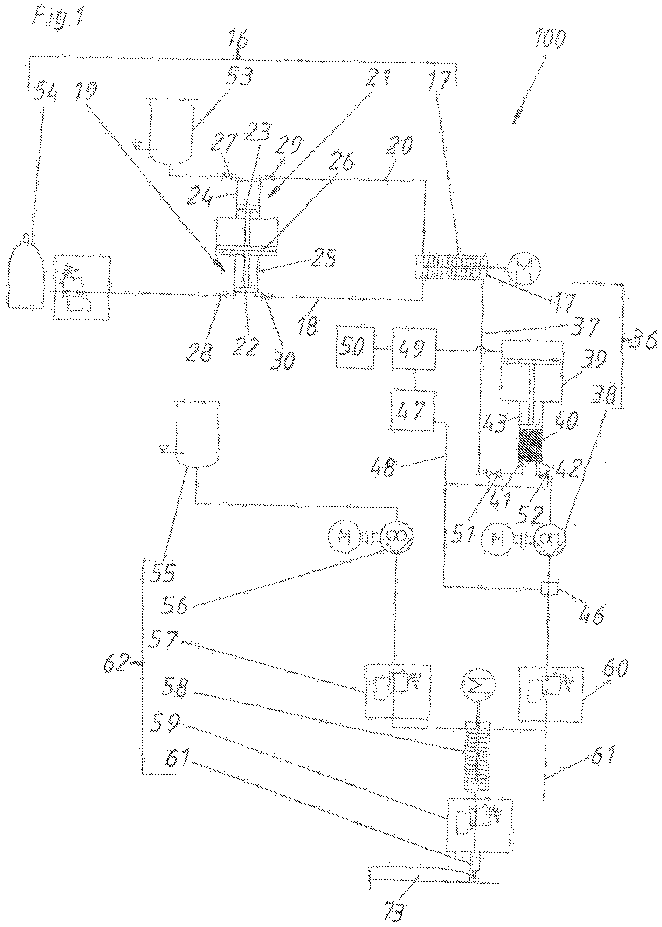

Fig. 1 zeigt in ihrer Gesamtheit schematisch eine Vorrichtung 100 zur Herstellung von geschäumten Kunststoffteilen, insbesondere von Dichtungsraupen. Diese Vorrichtung 100 weist wiederum mehrere wesentliche Untereinheiten auf.

Eine solche Untereinheit wird durch eine Vorrichtung 16 zum Herstellen einer Mischung aus wenigstens einem Gas und wenigstens einer flüssigen Kunststoffkomponente gebildet. Diese Vorrichtung 16 wiederum weist zumindest eine Mischvorrichtung 17, eine über eine erste Leitung 18 mit der Mischvorrichtung 17 verbundene Einbringvorrichtung 19 für das wenigstens eine Gas und eine über eine zweite Leitung 20 mit der Mischvorrichtung 17 verbundene Fördervorrichtung 21 für die wenigstens eine flüssige Kunststoffkomponente auf. Zudem weist diese Vorrichtung 16 einen Behälter 53 für die Kunststoffkomponente und eine Gasquelle 54, insbesondere eine Drucklufterzeugungsvorrichtung, auf. Statt des Behälters 53 könnte auch eine Förderpumpe vorgesehen sein.

Bei einer solchen Vorrichtung 16 ist im Gegensatz zum Stand der Technik vorgesehen, dass die Einbringvorrichtung 19 und die Fördervorrichtung 21 als Kolben 22 und 23 aufweisende Kolbenpumpen 25 und 24 ausgebildet sind.

Der Kolben 22 der Einbringvorrichtung 19 (Kolbenpumpe 25) und der Kolben 23 der Fördervorrichtung 21 (Kolbenpumpe 24) sind in diesem Beispiel mechanisch gegengleich über einen Druckübersetzer 26 gekoppelt. Dieser gestattet die Verwendung eines Antriebs, der bei relativ geringem Druck arbeitet (z.B. Pneumatik), da über die Kraftübersetzung die notwendige Krafterhöhung erfolgt. Zu sehen sind außerdem Einlassventile 27, 28 und Auslassventile 29, 30.

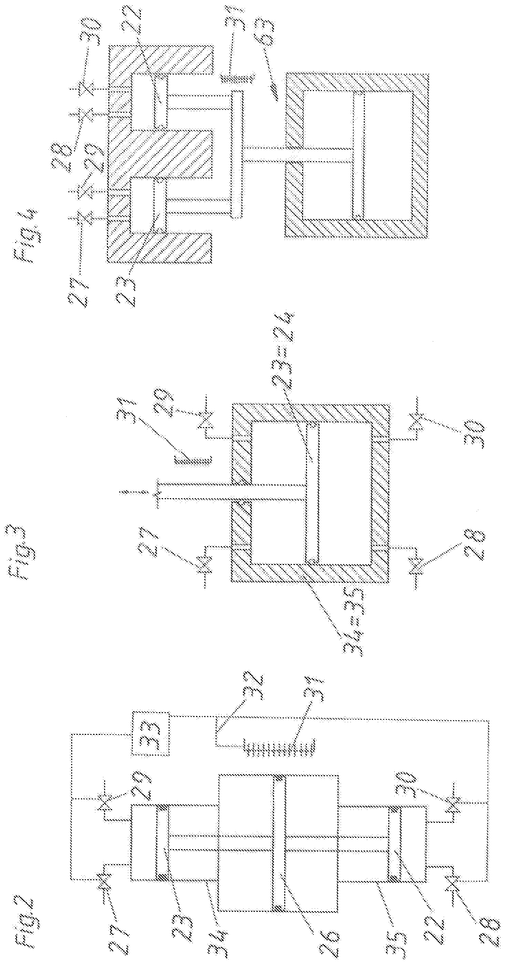

Wie in Fig. 2 detaillierter gezeigt, werden diese Einlassventile 27, 28 und Auslassventile 29, 30 durch eine Steuereinrichtung 33 abgestimmt auf die Bewegung der gekoppelten Kolben 22, 23 betätigt. Dargestellt ist außerdem ein Sensor 31, welcher über eine Signalleitung 32 mit der Steuereinrichtung 33 zur Signalübertragung in Verbindung steht. Der Sensor 31 dient zur Bestimmung der Position des Druckübersetzers 26. Damit wird auch die Position der Kolben 22, 23 bestimmt. Die Position der Kolben 22, 23 kann über den Sensor 31 auch direkt bestimmt werden (siehe die weiteren Ausführungsbeispiele). Generell kann mit einem solchen Sensor 31 eine Leckageerkennung erfolgen, nämlich wenn die Kolbendichtungen zwischen dem Kolben 23 und dem Zylinder 34 der Einbringvorrichtung 19, die Kolbendichtungen zwischen dem Kolben 22 und dem Zylinder 35 der Fördervorrichtung 21 und/oder zumindest eines der Ventile 27 bis 30 verschlissen sind. Zur Leckageerkennung werden z.B. Einlassventil 28 und Auslassventil 30 der Gasseite geschlossen. Durch den Kolben 22 wird eine Komprimierung des zwischen Einlassventil 28 und Auslassventil 30 befindlichen Gasvolumens durchgeführt. Liegt ein Leck vor, kommt es nach erfolgter Komprimierung zu einer irregulären Bewegung des Druckübersetzers 26, die vom Sensor 31 detektiert wird. Es kann außerdem überprüft werden, ob in der flüssigen Kunststoffkomponente irreguläre Gasanteile vorhanden sind, da diese bei geschlossenem Einlassventil 27 und Auslassventil 29 zu einem Bewegen des Kolbens 23 führen, da die flüssige Kunststoffkomponente durch die irregulären Gasanteile kompressibel ist. Dies kann gegebenenfalls durch die Steuereinrichtung 33 ausgeglichen werden.

Fig. 3 zeigt eine einzelne Kolbenpumpe, welche gleichzeitig die Kolbenpumpe 24 für die Fördervorrichtung 21 und die Kolbenpumpe 25 für die Einbringvorrichtung 19 bildet. Bei dieser Variante ist kein separater Druckübersetzer vorgesehen, vielmehr bildet ein Kolben sowohl den Kolben 23 der Kolbenpumpe 24 als auch den Kolben 22 der Kolbenpumpe 25. Auch dieses System gemäß Fig. 3 arbeitet mechanisch gegengleich. Das heißt, wenn über die (unten dargestellte) Einbringvorrichtung 19 Gas ausgebracht wird, wird flüssige Kunststoffkomponente in die Fördervorrichtung 21 eingebracht und umgekehrt.

Demgegenüber zeigt Fig. 4 ein System, bei welchem die Kolbenpumpen 24 und 25 mechanisch synchron gekoppelt sind. Konkret sind der Kolben 22 der Einbringvorrichtung 19 und der Kolben 23 der Fördervorrichtung 21 über einen Koppelmechanismus 63 derart gekoppelt, dass bei einem Ausbringen von Gas aus der Einbringvorrichtung 19 flüssige Kunststoffkomponente aus der Fördervorrichtung 21 ausgebracht wird und bei einem Einbringen von Gas in die Einbringvorrichtung 19 flüssige Kunststoffkomponente in die Fördervorrichtung 21 eingebracht wird.

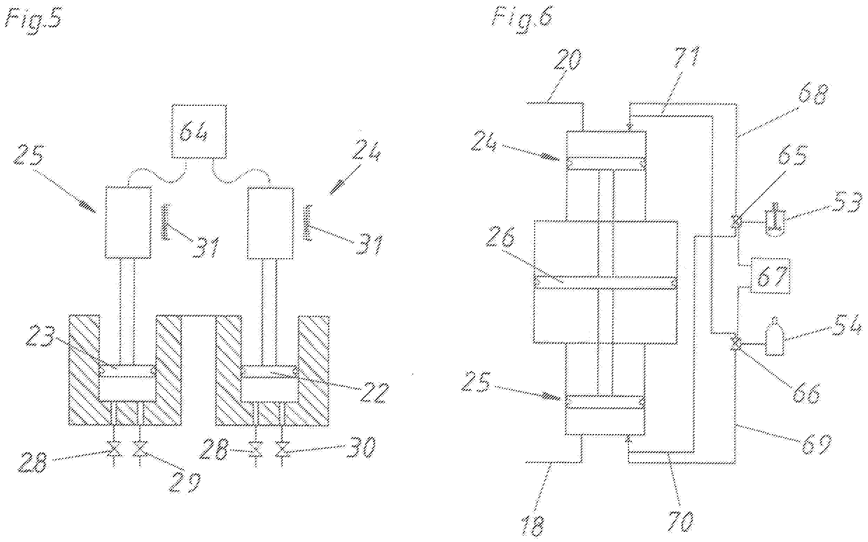

Fig. 5 zeigt eine elektronische Koppelung der Kolbenpumpen 24 und 25. Dabei wird die Bewegung der Kolben 22 und 23 von einer Steuervorrichtung 64 gesteuert, welche mit Antriebsvorrichtungen der beiden Kolbenpumpe 24 und 25 in signaltechnischer Verbindung steht. Die Kolben 22 und 23 können gegengleich oder synchron bewegt werden. Dies ist über die Steuervorrichtung 64 einstellbar.

Fig. 6 zeigt eine Kolbenpumpe 25 und eine Kolbenpumpe 24, die jeweils wechselweise die Einbringvorrichtung 19 oder die Fördervorrichtung 21 bilden. Ein Vorteil besteht dabei darin, dass auf beiden Seiten die Dichtungen abwechselnd durch die flüssige Kunststoffkomponente geschmiert werden. Ein Wechsel ist nach eine vorgebbaren Anzahl von Zyklen möglich. Der Wechsel erfolgt über Schaltvorrichtung 65 und 66, welche entweder händisch umgeschaltet werden können oder aber bevorzugt über eine Steuervorrichtung 67, vorzugsweise regelmäßig, umgeschaltet werden. In der ersten Schaltstellung wird die flüssige Kunststoffkomponente vom Behälter 53 über eine erste Leitung 68 zur (oben dargestellten) Kolbenpumpe 24 gefördert, während das Gas von der Gasquelle 54 über die zweite Leitung 69 zur Kolbenpumpe 25 gefördert wird. Insofern stimmt das gesamte System in dieser ersten Schaltstellung mit den Fig. 1 und 2 überein. In der zweiten Schaltstellung allerdings erfolgt eine Umleitung. Konkret wird in dieser zweiten Schaltstellung die flüssige Kunststoffkomponente vom Behälter 53 über eine dritte Leitung 70 zur (unten dargestellten) Kolbenpumpe 25 gefördert, während das Gas von der Gasquelle 54 über eine vierte Leitung 71 zur Kolbenpumpe 24 gefördert wird. In dieser zweiten Schaltstellung bildet demnach - umgekehrt zur ersten Schaltstellung - die Kolbenpumpe 25 die Fördervorrichtung 21 und die Kolbenpumpe 24 die Einbringvorrichtung 19. Je nach Schaltstellung wird dann über die erste Leitung 18 bzw. die zweite Leitung 20 die flüssige Kunststoffkomponente bzw. das Gas zur Mischvorrichtung 17 weitergepumpt.

Zurückkehrend zu Fig. 1 wird eine weitere Untereinheit der Vorrichtung 100 durch eine Vorrichtung 36 zum Bereitstellen einer mit Gas vermischten, flüssigen Kunststoffkomponente für eine Dosiervorrichtung 38 gebildet. Diese Vorrichtung 36 weist eine Quelle 37 für wenigstens eine mit Gas vermischte flüssige Kunststoffkomponente auf; diese Quelle 37 wird durch eine Leitung gebildet, welche von der bereits angeführten Mischvorrichtung 17 wegführt. Weiters weist diese Vorrichtung 36 eine intermittierend arbeitende Weiterleitungsvorrichtung für die wenigstens eine mit Gas vermischte flüssige Kunststoffkomponente auf. Diese intermittierend arbeitende Weiterleitungsvorrichtung wird durch die Kolbenpumpen 24, 25 gebildet. Unter intermittierend arbeitende Quelle wird nicht nur eine Quelle verstanden, deren Förderleistung auf Null abfällt sondern auch eine Quelle, deren Förderleistung starken Schwankungen unterworfen ist.

Die Vorrichtung 36 weist darüber hinaus eine Dosiervorrichtung 38, vorzugsweise eine Dosierpumpe, auf, für welche die Kunststoffkomponente von der Weiterleitungsvorrichtung bereitgestellt wird. Zudem weist die Vorrichtung 36 eine zwischen der Quelle 37 für die wenigstens eine mit Gas vermischte flüssige Kunststoffkomponente und der Dosiervorrichtung 38 angeordnete Puffervorrichtung 39 mit einem variablen Puffervolumen 40 auf, durch welche die intermittierend zur Puffervorrichtung 39 geförderte mit Gas vermischte flüssige Kunststoffkomponente stets in ausreichender Menge mit ausreichendem Vorspanndruck für die Dosiervorrichtung 38 zur Verfügung gestellt wird. Nach der Dosiervorrichtung 38 gelangt die mit Gas vermischte flüssige Kunststoffkomponente zu einem Dosierventil 60, wonach die mit Gas vermischte flüssige Kunststoffkomponente direkt (siehe strichliert dargestellte Düse 61) - oder wie in Fig. 1 dargestellt indirekt über ein weiteres Mischelement 58 - über eine Düse 61 ausgebracht und durch das Ausbringen und den damit einhergehenden Druckabfall ausschäumt.

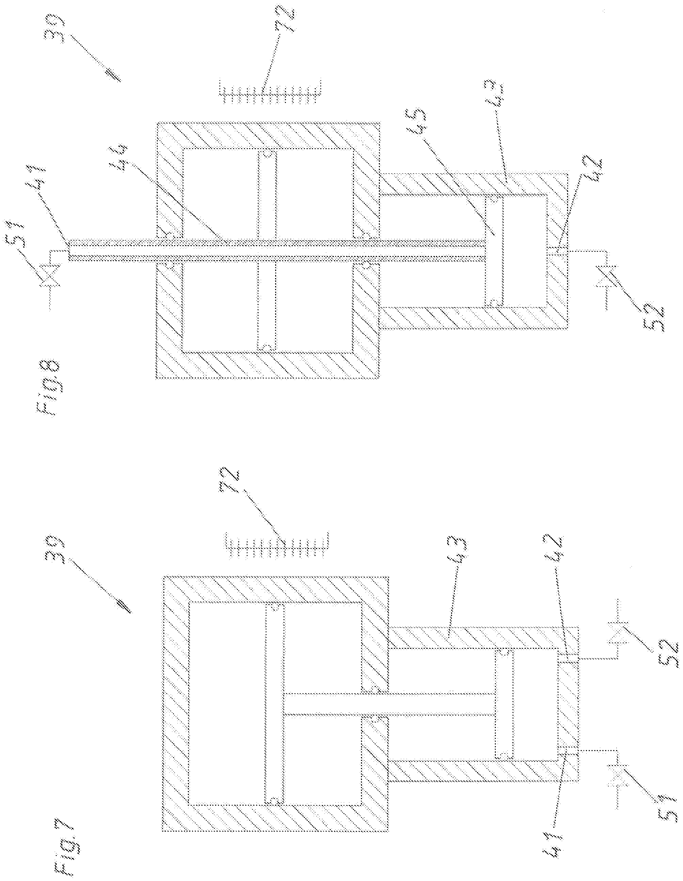

Um eine möglichst gleichbleibende Weiterleitung zu ermöglichen, ist bevorzugt vorgesehen, dass durch die Puffervorrichtung 39 der zwischen Puffervorrichtung 39 und Dosiervorrichtung 38 in der mit Gas vermischten flüssigen Kunststoffkomponente herrschende Druck steuerbar ist. Über eine Einlassöffnung 41 gelangt die mit Gas vermischte flüssige Kunststoffkomponente von der Quelle 37 in das Puffervolumen 40 der Puffervorrichtung 39. Über eine Auslassöffnung 42 ist das Puffervolumen 40 wiederum mit der Dosiervorrichtung 38 verbunden. In Fig. 1 ist die Einlassöffnung 41 in einer Wandung eines Gehäuses 43 der Puffervorrichtung 39 ausgebildet. Dies ist ebenso in Fig. 7 ersichtlich. Alternativ kann aber auch vorgesehen sein, dass die Einlassöffnung 41 in einer mit einem Kolben 45 verbundenen Kolbenstange 44 der Puffervorrichtung 39 ausgebildet ist (siehe Fig. 8). Weiters ist vor der Einlassöffnung ein Einlassventil 51 und nach der Auslassöffnung 42 eine Auslassventil 52 angeordnet. Zudem kann ein Wegsensor 72 vorgesehen sein, mit welchem wenigstens ausgewählte Positionen des Kolbens 45 im Gehäuse 43 bestimmbar sind.

Weiters ist vorgesehen, dass auf einer Ausgangsseite der Dosiervorrichtung 38 ein Drucksensor 46 angeordnet ist. Dieser Drucksensor 46 steht mit einer Steuervorrichtung 47 über eine Steuerleitung 48 in Verbindung. Die Steuervorrichtung 47 steuert die Puffervorrichtung 39 derart, dass der auf der Eingangsseite der Dosiervorrichtung 38 anliegende Druck dem auf der Ausgangsseite der Dosiervorrichtung 38 herrschenden Druck nachgeführt wird. Weiters kann die Steuervorrichtung 47 so ausgebildet sein, sowohl das Einlassventil 51 als auch das Auslassventil 52 zu schließen und die sich im Puffervolumen 40 befindliche mit Gas vermischte flüssige Kunststoffkomponente zu komprimieren. Zudem kann ein nicht dargestellter Sensor vorgesehen sein, durch den eine irreguläre Komprimierung des Puffervolumens 40 detektierbar ist.

Weiters ist die Puffervorrichtung 39 mit einer Vorrichtung 49 zur Druckbeaufschlagung der Puffervorrichtung 39 verbunden. Diese ist entweder durch die Steuervorrichtung 47 (strichliert eingezeichnete Leitung) oder durch eine eigenständige Steuervorrichtung 50 ansteuerbar.

Prinzipiell würden für die Herstellung von geschäumten Kunststoffteilen in Form von Dichtungsraupen bereits die beiden Vorrichtungen 16 und 36 genügen. Es kann aber zusätzlich bevorzugt vorgesehen sein, dass eine zweite Kunststoffkomponente parallel zur ersten Kunststoffkomponente oder gemischt mit der ersten Kunststoffkomponente zum Kunststoffteil, vorzugsweise physikalisch, ausschäumt. Deswegen wird eine weitere Untereinheit der Vorrichtung 100 durch eine Vorrichtung 62 zum Mehrkomponentenschäumen gebildet (siehe wieder Fig. 1). Diese Vorrichtung 54 weist einen Behälter 55 für eine zweite Kunststoffkomponente auf, von welcher die, vorzugsweise mit Gas vermengte, zweite Kunststoffkomponente über eine Dosiervorrichtung 56 und einem Dosierventil 57 zum Mischelement 58 geführt wird. In diesem Mischelement 58 wird diese zweite Kunststoffkomponente mit der ersten Kunststoffkomponente vermischt. Anschließend wird diese Mischung nach einem weiteren Dosierventil 59 über eine schematisch angedeutete Düse 61 ausgebracht, wodurch das in der Mischung enthaltene Gas ausschäumt. Anders ausgedrückt kommt es durch das Ausbringen zu einem Druckabfall, das Gas bringt die flüssige Kunststoffkomponente zum Schäumen und es entsteht nach Aushärtung der geschäumten Kunststoffkomponente ein mit Poren versehener Kunststoffteil zum Beispiel in Form einer Dichtungsraupe 73.

In den Dosierventilen 57 und/oder 60 können ebenso Sperrventile vorgesehen sein, wie sie in der Fig. 1 mit den Bezugszeichen 51 und 52 versehen als Einlass und Auslassventil Verwendung finden.

### Bezugszeichenliste:

- 16: Vorrichtung
- 17: Mischvorrichtung
- 18: erste Leitung
- 19: Einbringvorrichtung
- 20: zweite Leitung
- 21: Fördervorrichtung
- 22: Kolben
- 23: Kolben
- 24: Kolbenpumpe
- 25: Kolbenpumpe
- 26: Druckübersetzer
- 27: Einlassventil
- 28: Einlassventil
- 29: Auslassventil
- 30: Auslassventil
- 31: Sensor
- 32: Signalleitung
- 33: Steuereinrichtung
- 34: Zylinder
- 35: Zylinder
- 36: Vorrichtung zum Weiterleiten einer flüssigen Kunststoffkomponente
- 37: Quelle
- 38: Dosiervorrichtung
- 39: Puffervorrichtung
- 40: Puffervolumen
- 41: Einlassöffnung
- 42: Auslassöffnung
- 43: Gehäuse
- 44: Kolbenstange
- 45: Kolben
- 46: Drucksensor
- 47: Steuervorrichtung
- 48: Steuerleitung
- 49: Vorrichtung zur Druckbeaufschlagung
- 50: Steuervorrichtung
- 51: Einlassventil
- 52: Auslassventil
- 53: Behälter für Kunststoffkomponente
- 54: Gasquelle
- 55: Behälter für zweite Kunststoffkomponente
- 56: Mischvorrichtung
- 57: Dosierventil
- 58: Mischelement
- 59: Dosierventil
- 60: Dosierventil
- 61: Düse
- 62: Vorrichtung zum Mehrkomponentenschäumen
- 63: Koppelmechanismus
- 64: Steuervorrichtung
- 65: Schaltvorrichtung
- 66: Schaltvorrichtung
- 67: Steuervorrichtung
- 68: erste Leitung
- 69: zweite Leitung
- 70: dritte Leitung
- 71: vierte Leitung
- 72: Wegsensor
- 73: Dichtungsraupe
- 100: Vorrichtung zur Herstellung von geschäumten Kunststoffteilen

## Patentansprüche

1. Vorrichtung (100) zur Herstellung von geschäumten Kunststoffteilen, insbesondere Dichtungsraupen, mit
- einem Behälter (53) oder einer Förderpumpe für eine flüssige Kunststoffkomponente,
- einer Gasquelle (54),
- zumindest einer Mischvorrichtung (17),
- einer über eine erste Leitung (18) mit der Mischvorrichtung (17) verbundenen Einbringvorrichtung (19) für das wenigstens eine Gas, wobei die Einbringvorrichtung (19) als einen Kolben (22) aufweisende erste Kolbenpumpe (25) ausgebildet ist,
- einer über eine zweite Leitung (20) mit der Mischvorrichtung (17) verbundenen Fördervorrichtung (21) für die wenigstens eine flüssige Kunststoffkomponente, wobei die Fördervorrichtung (21) als eine einen Kolben (23) aufweisende zweite Kolbenpumpe (24) ausgebildet ist,
- einer intermittierend arbeitenden Weiterleitungsvorrichtung, welche durch die Kolbenpumpen (24, 25) gebildet ist,
- einer Quelle (37) für die wenigstens eine mit Gas vermischte flüssige Kunststoffkomponente, wobei diese Quelle (37) durch eine Leitung gebildet wird, welche von der Mischvorrichtung (17) wegführt, und
- einer Dosiervorrichtung (38),
wobei von der intermittierend arbeitenden Weiterleitungsvorrichtung über die Quelle (37) die wenigstens eine mit Gas vermischte flüssige Kunststoffkomponente der Dosiervorrichtung (38) intermittierend bereitstellbar ist, **dadurch gekennzeichnet, dass** zwischen der Quelle (37) für die wenigstens eine mit Gas vermischte flüssige Kunststoffkomponente und der Dosiervorrichtung (38) eine über eine Einlassöffnung (41) mit der Quelle (37) und über eine Auslassöffnung (42) mit der Dosiervorrichtung (38) verbundene Puffervorrichtung (39) mit einem variablen Puffervolumen (40) angeordnet ist.

2. Vorrichtung (100) nach Anspruch 1, **dadurch gekennzeichnet, dass** der zwischen der Puffervorrichtung (39) und der Dosiervorrichtung (38) in der flüssigen Kunststoffkomponente herrschende Druck durch die Puffervorrichtung (39) - vorzugsweise auf einen konstanten Wert - steuerbar ist.

3. Vorrichtung (100) nach wenigstens einem der vorhergehenden Ansprüche, **dadurch gekennzeichnet, dass** auf einer Ausgangsseite der Dosiervorrichtung (38) ein Drucksensor (46) angeordnet ist, der mit einer Steuervorrichtung (47) in Verbindung steht, wobei die Steuervorrichtung (47) über eine Steuerleitung (48) die Puffervorrichtung (39) derart ansteuert, dass der auf einer Eingangsseite der Dosiervorrichtung (38) anliegende Druck dem auf der Ausgangsseite der Dosiervorrichtung (38) herrschenden Druck nachgeführt wird.

4. Vorrichtung (100) nach wenigstens einem der vorhergehenden Ansprüche, **dadurch gekennzeichnet, dass** die Quelle (37) der Puffervorrichtung (39) eine mit Gas versetzte flüssige Kunststoffkomponente zuführt oder bereitstellt.

5. Vorrichtung (100) nach wenigstens einem der vorangehenden Ansprüche, **dadurch gekennzeichnet, dass** die Einlassöffnung (41) oder die Auslassöffnung (42) in einer Wandung eines Gehäuses (43) der Puffervorrichtung (39) ausgebildet ist.

6. Vorrichtung (100) nach wenigstens einem der vorangehenden Ansprüche, **dadurch gekennzeichnet, dass** die Einlassöffnung (41) oder die Auslassöffnung (42) in einer mit einem Kolben (45) verbundenen Kolbenstange (44) der Puffervorrichtung (39) ausgebildet ist.

7. Vorrichtung (100) nach wenigstens einem der vorhergehenden Ansprüche, **dadurch gekennzeichnet, dass** die Puffervorrichtung (39) mit einer durch eine Steuervorrichtung (47, 50) ansteuerbaren Vorrichtung (49) zur Druckbeaufschlagung der Puffervorrichtung (39) verbunden ist, welche vorzugsweise pneumatisch ausgebildet ist.

8. Vorrichtung (100) nach wenigstens einem der vorhergehenden Ansprüche, **dadurch gekennzeichnet, dass** die Vorrichtung (36) zur Herstellung eines physikalisch geschäumten Kunststoffteils ausgebildet ist.

9. Vorrichtung (100) nach wenigstens einem der vorhergehenden Ansprüche, **dadurch gekennzeichnet, dass** die Puffervorrichtung (39) einen in einem Gehäuse (43) verfahrbaren Kolben (45) aufweist, wobei vorzugsweise ein Wegsensor zur Bestimmung wenigstens ausgewählter Positionen des Kolbens (45) im Gehäuse (43) vorgesehen ist.

10. Vorrichtung (100) nach wenigstens einem der vorhergehenden Ansprüche, **dadurch gekennzeichnet, dass** vor der Einlassöffnung (41) ein Einlassventil (51) und nach der Auslassöffnung (42) ein Auslassventil (52) angeordnet sind, die durch eine Steuervorrichtung ansteuerbar sind.

11. Vorrichtung (100) nach Anspruch 10, **dadurch gekennzeichnet, dass** die Steuervorrichtung dazu ausgebildet ist, sowohl das Einlassventil (51) als auch das Auslassventil (52) zu schließen und die sich im Puffervolumen (40) befindliche flüssige Kunststoffkomponente zu komprimieren, und dass ein Sensor vorgesehen ist, durch den eine irreguläre Verkleinerung bzw. Komprimierung des Puffervolumens (40) detektierbar ist.

## Claims

1. A device (100) for producing foamed plastics parts, in particular sealing beads, comprising
- a container (53) or a feed pump for a liquid plastics component,
- a gas source (54),
- at least one mixing device (17),
- an introducing device (19), connected to the mixing device (17) via a first line (18), for the at least one gas, the introducing device (19) being designed as a first piston pump (25) having a piston (22),
- a feed device (21), connected to the mixing device (17) via a second line (20), for the at least one liquid plastics component, the feed device (21) being designed as a second piston pump (24) having a piston (23),
- an intermittently operating transmission device which is formed by the piston pumps (24, 25),
- a source (37) for the at least one liquid plastics component mixed with gas, said source (37) being formed by a line leading away from the mixing device (17), and
- a dispensing device (38),
it being possible for the at least one liquid plastics component, mixed with gas, of the dispensing device (38) to be intermittently provided by the intermittently operating transmission device via the source (37), **characterized in that** a buffer device (39) is arranged between the source (37) for the at least one liquid plastics component mixed with gas and the dispensing device (38), which buffer device is connected to the source (37) via an inlet opening (41) and to the dispensing device (38) via an outlet opening (42) and has a variable buffer volume (40).

2. The device (100) according to claim 1, **characterized in that** the pressure prevailing between the buffer device (39) and the dispensing device (38) in the liquid plastics component can be controlled by the buffer device (39), preferably to a constant value.

3. The device (100) according to at least one of the preceding claims, **characterized in that** a pressure sensor (46) is arranged on an output side of the dispensing device (38), which sensor is connected to a control device (47), the control device (47) controlling the buffer device (39) via a control line (48) such that the pressure prevailing on an input side of the dispensing device (38) is adjusted to the pressure prevailing on the output side of the dispensing device (38).

4. The device (100) according to at least one of the preceding claims, **characterized in that** the source (37) of the buffer device (39) supplies or provides a liquid plastics component mixed with gas.

5. The device (100) according to at least one of the preceding claims, **characterized in that** the inlet opening (41) or the outlet opening (42) is formed in a wall of a housing (43) of the buffer device (39).

6. The device (100) according to at least one of the preceding claims, **characterized in that** the inlet opening (41) or the outlet opening (42) is formed in a piston rod (44) of the buffer device (39) that is connected to a piston (45).

7. The device (100) according to at least one of the preceding claims, **characterized in that** the buffer device (39) is connected to a device (49) that can be actuated by a control device (47, 50) for pressurizing the buffer device (39) and is preferably pneumatic.

8. The device (100) according to at least one of the preceding claims, **characterized in that** the device (36) is designed to produce a physically foamed plastics part.

9. The device (100) according to at least one of the preceding claims, **characterized in that** the buffer device (39) has a piston (45) that is movable in a housing (43), preferably a displacement sensor for determining at least selected positions of the piston (45) in the housing (43) being provided.

10. The device (100) according to at least one of the preceding claims, **characterized in that** an inlet valve (51) is arranged upstream of the inlet opening (41) and an outlet valve (52) is arranged downstream of the outlet opening (42), which valves can be actuated by a control device.

11. The device (100) according to claim 10, **characterized in that** the control device is designed to close both the inlet valve (51) and the outlet valve (52) and to compress the liquid plastics component located in the buffer volume (40), and **in that** a sensor is provided, by means of which irregular reduction or compression of the buffer volume (40) can be detected.

## Revendications

1. Dispositif (100) de fabrication de pièces en plastique moussées, en particulier de cordons de joints d'étanchéité, comprenant
- un récipient (53) ou une pompe d'alimentation pour un composant plastique liquide,
- une source de gaz (54),
- au moins un dispositif de mélange (17),
- un dispositif d'introduction (19) pour l'au moins un gaz, relié au dispositif de mélange (17) par une première conduite (18), dans lequel le dispositif d'introduction (19) est réalisé sous la forme d'une première pompe à piston (25) comportant un piston (22),
- un dispositif de transport (21) pour l'au moins un composant plastique liquide, relié au dispositif de mélange (17) par une seconde conduite (20), dans lequel le dispositif de transport (21) est réalisé sous la forme d'une seconde pompe à piston (24) comportant un piston (23),
- un dispositif de transfert fonctionnant de manière intermittente, lequel est formé par les pompes à piston (24, 25),
- une source (37) pour l'au moins un composant plastique liquide mélangé à du gaz, ladite source (37) étant formée par une conduite s'éloignant du dispositif de mélange (17), et
- un dispositif de dosage (38),
dans lequel l'au moins un composant plastique liquide mélangé à du gaz peut être fourni au dispositif de dosage (38), de manière intermittente, par le dispositif de transfert fonctionnant de manière intermittente par l'intermédiaire de la source (37), **caractérisé en ce qu'**un dispositif tampon (39) présentant un volume tampon (40) variable, relié à la source (37) par l'intermédiaire d'une ouverture d'entrée (41) et au dispositif de dosage (38) par l'intermédiaire d'une ouverture de sortie (42), est disposé entre la source (37) pour l'au moins un composant plastique liquide mélangé à du gaz et le dispositif de dosage (38).

2. Dispositif (100) selon la revendication 1, **caractérisé en ce que** la pression régnant entre le dispositif tampon (39) et le dispositif de dosage (38) dans le composant plastique liquide peut être réglée (de préférence à une valeur constante) par le dispositif tampon (39).

3. Dispositif (100) selon au moins l'une des revendications précédentes, **caractérisé en ce qu'**un capteur de pression (46) est disposé sur un côté de sortie du dispositif de dosage (38), lequel capteur de pression est relié à un dispositif de commande (47), dans lequel le dispositif de commande (47) commande le dispositif tampon (39) par l'intermédiaire d'une conduite de commande (48) de telle manière que la pression appliquée sur un côté d'entrée du dispositif de dosage (38) est adaptée à la pression régnant sur le côté de sortie du dispositif de dosage (38).

4. Dispositif (100) selon au moins l'une des revendications précédentes, **caractérisé en ce que** la source (37) amène ou fournit un composant plastique liquide mélangé à du gaz au dispositif tampon (39).

5. Dispositif (100) selon au moins l'une des revendications précédentes, **caractérisé en ce que** l'ouverture d'entrée (41) ou l'ouverture de sortie (42) est réalisée dans une paroi d'un boîtier (43) du dispositif tampon (39).

6. Dispositif (100) selon au moins l'une des revendications précédentes, **caractérisé en ce que** l'ouverture d'entrée (41) ou l'ouverture de sortie (42) est réalisée dans une tige de piston (44) du dispositif tampon (39) reliée à un piston (45).

7. Dispositif (100) selon au moins l'une des revendications précédentes, **caractérisé en ce que** le dispositif tampon (39) est relié à un dispositif (49) pouvant être commandé par un dispositif de commande (47, 50) de façon à pressuriser le dispositif tampon (39), lequel dispositif présente de préférence une conception de type pneumatique.

8. Dispositif (100) selon au moins l'une des revendications précédentes, **caractérisé en ce que** le dispositif (36) est conçu pour la fabrication d'une pièce en plastique physiquement moussée.

9. Dispositif (100) selon au moins l'une des revendications précédentes, **caractérisé en ce que** le dispositif tampon (39) comporte un piston (45) pouvant se déplacer dans un boîtier (43), dans lequel, de préférence, un capteur de déplacement est prévu pour déterminer au moins des positions sélectionnées du piston (45) dans le boîtier (43).

10. Dispositif (100) selon au moins l'une des revendications précédentes, **caractérisé en ce qu'**une soupape d'entrée (51) est disposée devant l'ouverture d'entrée (41) et **en ce qu'**une soupape de sortie (52) est disposée derrière l'ouverture de sortie (42), lesquelles soupapes peuvent être commandées par un dispositif de commande.

11. Dispositif (100) selon la revendication 10, **caractérisé en ce que** le dispositif de commande est conçu pour fermer aussi bien la soupape d'entrée (51) que la soupape de sortie (52) et pour comprimer le composant plastique liquide se trouvant dans le volume tampon (40), et **en ce qu'**un capteur est prévu, lequel capteur permet de détecter une réduction ou une compression irrégulière du volume tampon (40).
